# EUROPEAN PATENT SPECIFICATION

(11) **EP 4 091 805 B1**
(45) Date of publication and mention of the grant of the patent: **22.01.2025**
(21) Application number: 21305653.4
(22) Date of filing: 18.05.2021
(51) Int. Cl.: B29D 11/00, B41M 3/00, G02C 7/02

(54) **A METHOD FOR IMPROVED COATING OF AN OPTICAL ARTICLE COMPRISING OPTICAL ELEMENTS**
VERFAHREN ZUR VERBESSERTEN BESCHICHTUNG EINES OPTISCHEN ARTIKELS MIT OPTISCHEN ELEMENTEN
PROCÉDÉ PERMETTANT D'AMÉLIORER LE REVÊTEMENT D'UN ARTICLE OPTIQUE COMPRENANT DES ÉLÉMENTS OPTIQUES

(43) Date of publication of application: 23.11.2022
(73) Proprietor: Essilor International, 94220 Charenton-Le-Pont (FR)
(72) Inventor: MERIDIANO, Camille, 94370 SUCY EN BRIE (FR); PADIOU, Jean-Marc, 94500 CHAMPIGNY SUR MARNE (FR)
(74) Representative: Plasseraud IP

(56) References cited:
- WO-A1-2019/235249
- US-A1- 2010 172 025
- US-A1- 2013 057 608
- US-B2- 7 687 326
- US-B2- 8 728 712
- US-B2- 9 563 044

## Description

### FIELD OF THE INVENTION

The invention relates to a method for manufacturing an optical article comprising a base lens substrate having either on a lens substrate or embedded therein, at least one optical element such as a microlens, or a Fresnel structure, the method including a coating of a surface of the base lens substrate.

### BACKGROUND OF THE INVENTION

Optical articles such as lenses generally comprise a base-lens substrate which is configured in order to provide a desired optical function, such as a desired optical power.

It is nowadays possible to manufacture lenses incorporating microstructured optical elements, that can be either embedded within a base lens substrate, or arranged on a surface of the base lens substrate. In that latter case, the optical elements can protrude from the surface of the base lens substrate or be formed in recess with reference to said surface.

Different kinds of optical elements are known, for achieving different functions. According to a first example, the optical elements may be microlenses.

It is for instance known from document US 2020073147, an ophthalmic lens for a myopic eye which comprises a base lens with a focal power adapted to correct a refractive error of the myopic eye and at least one micro lens array arranged on the base lens, in which microlens array is configured to achieve a stop signal to eye growth.

It is also known from document WO2016/168746 a lens having a first optical power, the lens comprising an array of microlenses having a second optical power, the microlenses allowing to increase the correction provided by the lens even though the curvature of the lens is limited, or allowing forming multifocal lenses with large areas of different optical powers while not exhibiting sharp steps that are visible at a micro-scale.

According to another example, it is known from US 2019/235279 a lens including a plurality of scattering elements of various sizes and spacings which are arranged in order to reduce eye growth associated with myopia progression.

According to still another example, it is known from US 8,252,369 a lens comprising a surface forming a Fresnel lens, and a method for coating said surface.

It is now possible to manufacture these microstructured elements with high accuracy, for instance using techniques such as injection molding, digital surfacing etc. However, it is often desirable to add specific coatings or treatments to modify either optical or mechanical properties of the lenses. In this perspective, coating a lens surface on which are arranged microstructures can change the shape of the microstructure and impair the effect provided by those microstructures.

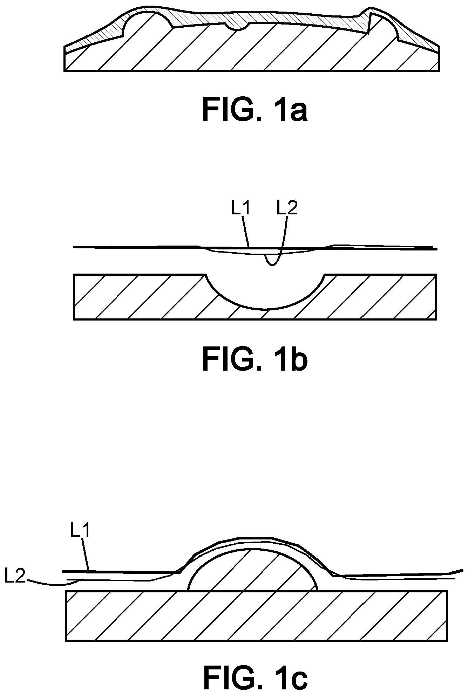

For instance, and as schematically shown in figure 1a, using usual methods like spin coating or dip coating, the coating is applied in a global continuous layer without taking into account local effects induced by the microstructures. The optical effect induced by the microstructures may be affected or even disappear.

An example is shown in figure 1b which shows an optical article having a microstructure arranged in recessed from a surface to be coated thereof. Line L1 represents the coating that is desired and line L2 represents the coating that is achieved using standard coating methods. One can notice that the coating exhibits a level variation over the area where the recessed microstructure is.

Another example is shown on figure 1c, which represents the coating using standard coating method of an optical article having a microstructure protruding from the surface to be coated. Here again line L1 represents the desired coating and line L2 represents the coating that is actually obtained. One can notice that the coating exhibits thickness variation at the transition area between the protruding element and the surrounding part of the coated surface.

It has been proposed some specific coating methods which are configured to preserve the shape of the microstructures after the coating. According to one example, it has been proposed in WO2020078964 a method for manufacturing an optical article comprising microstructures, in which the microstructures are formed in an abrasion resistant coating deposited over a base lens. According to other examples, such as in EP 2288489, molding methods can be adapted to ensure that the coating preserves the shape of the structures (in this case a Fresnel lens).

US 9 563 044 B2, US 8 728 712 B2, WO 2019/235249 A1 and US 2010/172025 A1 provide further examples of coating substrate-based lens surfaces.

However, it may also be desirable to modify optical or mechanical properties of the microstructures only, and this is not permitted by the solutions discussed above.

### SUMMARY OF THE INVENTION

The purpose of the invention is to provide a solution to the defects of the prior art.

In particular, one aim of the invention is to provide a method enabling to improve the mechanical properties of a lens comprising at least one optical element (such as a microlens), without modifying the optical properties of the optical element.

Another aim of the invention is to provide a method enabling to selectively modify optical properties of at least one optical element arranged on a base lens substrate.

In an embodiment of the invention, a method for manufacturing an optical article according to independent claim 1 is disclosed.

In embodiments, the parameter of the coating deposition changing according to the area includes at least one of the group consisting of:
- Presence or absence of coating,
- Composition of coating material,
- Refractive index of coating material,
- Viscosity of the coating material,
- Optical properties of the coating material, including transmissivity of the coating material in at least one determined range of wavelengths, or scattering properties of the coating material,
- Mechanical properties of the coating material,
- Hardness of the coating,
- Thickness of the coating,
- Volume and/or shape of droplets of coating deposited by inkjet,
- Preliminary surface treatment performed on the considered area.

According to the claimed invention, the at least three areas of the second lens surface comprise:
- a first set of areas located at the position of at least one optical element, and
- a second set of areas located at a position of the second lens surface devoid of any optical element.

The at least three areas of the second lens surface further comprise a third set of areas corresponding to transition areas between an optical element and a zone of the second lens surface devoid of optical element.

In embodiments, the differentiate coating deposition is configured to change at least one optical property of at least one optical element among optical power, asphericity, colour, and transmissivity.

In embodiments, the differentiate coating deposition is configured to preserve the shape of each optical element after coating.

In embodiments, the differentiate coating deposition is configured to change at least one optical or mechanical property of at least one area of the base-lens substrate devoid of any optical element.

In embodiments, the differentiate coating deposition is performed by inkjet printing.

In embodiments, the method further comprises performing a preliminary treatment of the second lens surface prior to performing the differentiate coating deposition in order to locally change the contact angle between a droplet of coating material and the second lens surface.

In embodiments, the method further comprises a preliminary step of locating at least one optical element, and inferring, from said location, the locations of the at least two areas.

In embodiments, performing a differentiate coating deposition comprises:
- performing coating deposition on a first area or set of areas,
- curing the deposited coating, and
- performing coating deposition with at least one changed coating parameter on a second area or set of areas.

In embodiments, the base-lens substrate comprises at least one optical element protruding from the second lens surface, and performing differentiate coating composition comprises one of:
- depositing coating only on the optical element,
- deposition coating only on the areas of the second lens surface devoid of the optical element,
- deposition coating only on a transition area between an optical element and a zone devoid of optical element,
- depositing coating over the second lens surface except on transition areas between an optical element and a zone devoid of optical element.

In embodiments, performing differentiate coating composition comprises depositing coating only on the optical element or on a transition area between an optical element and a zone devoid of optical element in order to change asphericity and/or optical power of the optical element.

In embodiments, the base-lens substrate comprises at least one optical element protruding from, or formed in recess from the second lens surface, the coating deposition is performed by inkjet printing and performing differentiate coating deposition on the second lens surface comprises changing the size of the deposited droplets according to the considered area to be coated in order to achieve constant thickness of the deposited coating over the second lens surface.

In embodiments, each optical element has a maximum height comprised between 0,1 µm and 50 µm and a maximum width comprised between 0.5 µm and 1.5 mm.

According to another object, it is also disclosed an optical article, comprising:
- a base-lens substrate having opposite first and second lens surfaces, and at least one optical element disposed on the second lens surface, each optical element having a maximum height that is less than or equal to 0.5 mm, and a diameter that is less than or equal to 2.0 mm,
- a coating extending over at least part of the second lens surface,
wherein the optical article is obtained by implementing the method according to independent claim 1.

The disclosed method includes performing differentiate coating deposition on a surface of a lens on which are arranged, or under which are embedded, optical elements. The differentiate coating deposition includes variations of at least one parameter of the coating deposition according to the location of the area of the surface to be coated with respect to the optical elements.

In embodiments, the method may comprise performing differentiate coating deposition of the optical elements and of the areas of the lens surface that are devoid of optical elements. It is then possible to modify the mechanical or optical properties of the optical elements only, or to modify the mechanical or optical properties of the base lens substrate without changing the optical properties of the optical elements.

### DESCRIPTION OF THE DRAWINGS

For a more complete understanding of the description provided herein and the advantages thereof, reference is now made to the brief descriptions below, taken in connection with the accompanying drawings and detailed description, wherein like reference represent like parts. The disclosed embodiments and examples do not necessarily fall under the scope of the claimed invention unless stated otherwise. The invention is defined in the independent claims.
Figure 1a to 1c, already discussed, schematically represent the coating of an optical article comprising optical elements arranged in recess or protruding from a surface to be coated, using standard coating techniques.
Figure 2 schematically shows the main steps of a method according to an embodiment.
Figures 3a to 3f schematically represent various base-lens substrates comprising optical elements either disposed on a surface thereof or embedded within the base-lens substrate, and different areas defined according to their relative position with respect to the optical element.
Figures 4a and 4d represents two successive stages of performing differentiate coating deposition on a base-lens substrate comprising optical elements on a surface thereof.
Figure 5 schematically represents an example on inkjet printing device.
Figure 6 shows examples of droplets having various shapes on a surface.
Figure 7 schematically shows markings used for positioning a base-lens substrate.
Figure 8 schematically represents a first example of differentiate coating deposition on a base-lens substrate having optical elements protruding from a surface to be coated.
Figure 9 schematically a second example of differentiate coating deposition on a base-lens substrate having optical elements protruding from a surface to be coated.
Figure 10 schematically represents a third example of differentiate coating deposition on a base-lens substrate having optical elements formed in recessed from a surface to be coated.
Figure 11 schematically represents a fourth example of differentiate coating deposition on a base-lens substrate having optical elements protruding from a surface to be coated.
Figure 12 schematically represents a fifth example of differentiate coating deposition on a base-lens substrate having optical elements protruding from a surface to be coated.
Figure 13 schematically represents a sixth example of differentiate coating deposition on a base-lens substrate having optical elements protruding from a surface to be coated.
Figure 14 schematically represents a seventh example of differentiate coating deposition on a base-lens substrate having optical elements protruding from a surface to be coated.

### DETAILED DESCRIPTION OF AT LEAST ONE EMBODIMENT OF THE INVENTION

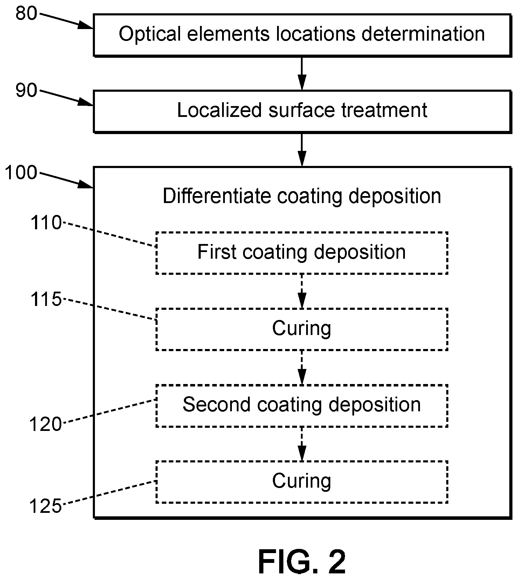

A method for manufacturing an optical article 1 will now be described with reference to figure 2. This method comprises performing, as disclosed in more details below, a differentiate coating deposition of a surface of a base-lens substrate 10 comprising at least one optical element. The resulting optical article 1 comprises at least said base-lens substrate 10 and a coating 30 on a surface thereof obtained by the differentiate coating deposition.

### Base-lens substrate comprising optical elements

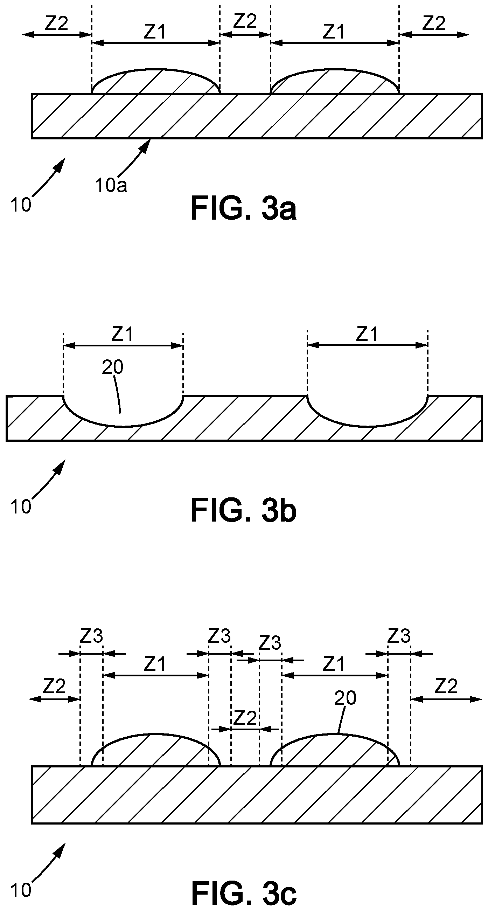

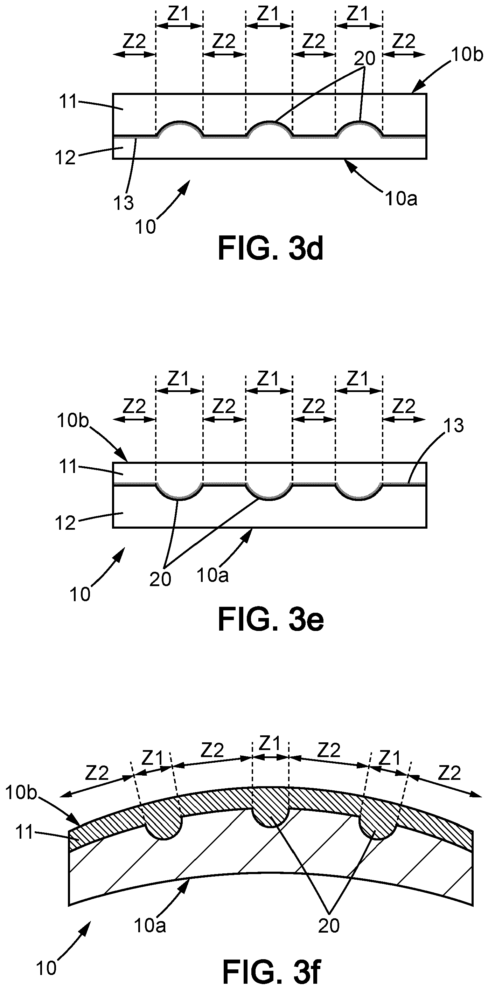

With reference to figures 3a to 3f, the base-lens substrate 10 may comprise a single layer or may be formed of a laminate. On figures 3d to 3f, references 11, 12 are used to designate different layers of a base-lens substrate formed of a laminate. The base-lens substrate preferably comprises at least a plano wafer providing no optical power, or a base lens providing optical power, or both, i.e. a base lens providing optical power and a wafer complementing the base lens with an optical function as described below.
- bandpass filtering, or filtering of specific colors, for instance by tinting, or incorporating photochromic or electrochromic functions, UV absorption, mirror, etc.),
- Polarization function.

A plano wafer refers to a film structure formed by either a single film layer or a film laminate structure formed of multiple film layers attached to one another. More precisely, the plano wafer 11 may be formed by one or several ophthalmic-grade function film (with for example polar or photochromic properties), optionally having an ophthalmic-grade protective film on one or both sides of the ophthalmic grade functional film.

A plano wafer may exhibit a thickness in the range of 20 to 700 micrometers, preferably 30 to 600 µm. The protective layer(s), if any, may have a thickness of about 50 µm.

Suitable transparent resin film or sheet materials for forming the plano wafer (including functional and protective films) include poly(vinyl alcohol) (PVA) or cellulose acylate-based materials, for example, cellulose diacetate and cellulose triacetate (TAC). Other usable wafer materials can include polycarbonate, polysulfone, cellulose acetate buturate (CAB) or cyclic oleofin copolymer (COC), polyacrylate, polyester, polystyrene, copolymers of acrylate and styrene, and poly(vinylalcohol) (PVA). Polycarbonate-based materials include, for example, polybisphenol-A carbonate; homopolycarbonate such as 1,1' dihroxydiphenyl-phenylmethylmethane, 1,1'-dihroxydiphenyl-diphenylmethane, 1,1 '-dihydroxy-3,3'-dimethyl diphenyl-2,2-propane, their mutual copolymer polycarbonate and copolymer polycarbonate with bisphenol-A.

The base lens 12 may be formed in mineral or organic eyeglass, for example any material currently used for organic ophthalmic lenses, e.g. thermoplastic or thermosetting plastic. In particular, thermoplastic materials may be selected from, for instance: polyamides, polyimide, polysulfones, polycarbonates and copolymers thereof, polyethylene terephtalate) and polymethylmethacrylate (PMMA).

Thermosetting materials may be obtained by polymerization of allyl derivatives such as the allyl carbonates of linear or branched aliphatic or aromatic polyols, such as ethylene glycol bis(allyl carbonate), diethylene glycol bis(2-methyl carbonate), diethylene glycol bis(allyl carbonate), ethylene glycol bis(2-chloroallyl carbonate), triethylene glycol bis(allyl carbonate), 1 ,3-propanediol bis(allyl carbonate), propylene glycol bis(2-ethylallyl carbonate), 1 ,3-butenediol bis(allyl carbonate), 1 ,4-butenediol bis(2-bromoallyl carbonate), dipropylene glycol bis(allyl carbonate), trimethylene glycol bis(2-ethylallyl carbonate), pentamethylene glycol bis(allyl carbonate), isopropylene bisphenol-A bis(allyl carbonate), poly(meth)acrylates and copolymers based substrates, such as substrates obtained by the polymerization of alkyl methacrylates, in particular C1 -C4 alkyl methacrylates such as methyl (meth)acrylate and ethyl (meth)acrylate, substrates comprising (meth)acrylic polymers and copolymers derived from bisphenol-A, polyethoxylated aromatic (meth)acrylates such as the polyethoxylated bisphenolate di(meth)acrylates, polythio(meth)acrylates, thermosetting polyurethanes, polythiourethanes, polyepoxides, polyepisulfides, as well as copolymers thereof and blends thereof.

Substrates particularly recommended are polycarbonates, for example those made from bisphenol-A polycarbonate, sold for example under the trade names LEXAN^{®} by General Electric or MAKROLON^{®} by Bayer AG, or those incorporating carbonate functional groups, in particular substrates obtained by polymerization or copolymerization of diethylene glycol bis(allyl carbonate), sold under the trade name CR-39^{®} by PPG INDUSTRIES (ORMA^{®} ESSILOR lens).Among other recommended substrates are substrates obtained by polymerization of thio(meth)acrylic monomers, such as those disclosed in the French patent application FR 2734827. Other examples of substrates to be suitably used include those obtained from MR6^{®}, MR7@, MR8^{®}, MR174 ^{®} and MR10^{®} resins (thermosetting polythiourethane resins). The various substrates based on polythiourethane resins are marketed by the Mitsui Toatsu Chemicals company and these substrates as well as the monomers used for their preparation are especially described in the patents U.S. Pat. No. 4,689,387, U.S. Pat. No. 4,775,733, U.S. Pat. No. 5,059,673, U.S. Pat. No. 5,087,758 and U.S. Pat. No. 5,191,055.

The base lens is preferably shaped to provide optical power suitable for correcting a wearer ametropia, for instance myopia or hyperopia. The base lens 12 may be monofocal or multifocal such as a multifocal progressive lens.

The base substrate 10 comprise other layers in addition to the base lens and/or plano wafer, such as for instance photochromic trans-bonding^{®} layer on a front surface of a base lens, or any additional layer which can be deposited on the base lens or plano wafer and which incorporates an optical function such that:
- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

As shown in figures 3a to 3f, the base lens substrate 10 comprises opposite first and second lens surfaces 10a, 10b. In embodiments, the first lens surface 10a may be a back surface located proximal to the eye of the user when the optical article is integrated in a pair of glasses, and the second lens surface 10b may be a front surface located distally from the eye of the user when the optical article is integrated in a pair of glasses.

The base lens substrate 10 further comprises at least one optical element 20 disposed on one of the opposite lens surfaces of the base lens substrate, for instance on the second lens surface, or embedded within the base-lens substrate. In the latter case, the at least one optical element is formed at an interface 13 between two layers 11, 12 of the base-lens substrate 10.

In embodiments, examples of which are shown in figures 2a, 2c and 2e, the base-lens substrate 10 comprises one or more optical elements 20 protruding from one of the opposite lens surfaces, for instance from the second lens surface 10b. By "protruding" is meant that each optical element 20 projects from the surface of the base-lens substrate outwardly, i.e. away from the base-lens substrate.

In other embodiments, an example of which is shown in figure 2b, the base-lens substrate 10 comprises one or more optical elements 20 arranged in recess from one of the opposite lens surfaces, for instance from the second lens surface 10b. By "in recess" is meant that each optical element 20 projects from the surface of the base-lens substrate 10 inwardly, i.e. towards the other surface of the base-lens substrate, and is thus performed by removal of material from the layer of material of the base-lens substrate in which it is formed.

In still other embodiments, examples of which are shown in figures 3d to 3f, the base-lens substrate 10 comprises one or more optical elements 20 embedded within the base-lens substrate 10. In this case, the base-lens substrate is formed of a plurality of superposed layers 11, 12, wherein the optical elements are formed at an interface 13 between two consecutive layers of the base-lens substrate 10.

Where the optical elements protrude from a surface of the base-lens substrate 10 or a layer of said substrate, it may be formed from the same material as the layer from which it protrudes and may be formed integral with the latter. Alternatively, it may be formed from a different material.

In the present disclosure, the optical elements are elements exhibiting a height variation with reference to the surface they are protruding from, or from which they are formed in recess, on a restricted width, and which provide optical wavefront modification on its intensity, curvature, or light deviation. The optical elements can exhibit, on the surface on which they are formed, a periodical or pseudo-periodical layout, but may also have randomized positions. Possible layouts of the optical elements may include a grid with constant grid step, honeycomb layout, multiple concentric rings, or contiguous disposition of the optical elements on at least part of the surface on which they are formed. By contiguous is meant that there is no space between the optical elements. The distance between two optical elements may range from 0 to 3 times a lateral dimension of an optical element.

For instance when optical elements provide a modification of the intensity of the optical wavefront, the optical elements may be absorptive and locally absorb wavefront intensity within the range of 0 to 100%. By locally is meant at the intersection between the wavefront and the optical elements.

When the optical elements provide a modification of the curvature of the wavefront, they can locally modify the wavefront curvature within a range of ± 20 Diopters.

When the optical elements provide light deviation, they can be adapted to locally scatter light within a range from ±1° to ± 30°.

The optical elements can be dimensioned, formed and organized to constitute any kind of optical functions, such as microlenses as disclosed in US2017/0131567 and WO2016/168746, Fresnel microstructures such as disclosed in EP 2 787 385 or WO 2014060552and/or technical or non technical marking such as the ones disclosed in EP2604415, all references being incorporated therein.

In embodiments, the optical elements 20 induce a local change in optical power of the base-lens substrate.

According to an embodiment, the at least one, for example all, of the optical element 20 is, for example are, micro-lens.

A microlens may be spherical, toric, or have an aspherical shape. A microlens may have a single focus point, or cylindrical power, or non-focusing point. In preferred embodiments, microlenses can be used to prevent progression of myopia or hyperopia. In that case, the base lens substrate comprises a base lens 12 providing an optical power for correcting myopia or hyperopia, and the microlenses may provide respectively an optical power greater than the optical power of the base lens 12 if the wearer has myopia, or an optical power lower than the optical power of the base lens 12 is the wearer has hyperopia.

In the sense of the disclosure, a "micro-lens" has a contour shape being inscribable in a circle having a diameter greater than or equal to 0.5 µm and smaller than or equal to 1.5 mm.

The optical elements may be configured so that along the at least one section of the base-lens substrate the mean sphere and/or the mean cylinder of optical elements increases from the center of said section towards the peripheral part of said section.

For example, the optical elements may be regularly distributed along circles centered on the optical center of the refraction area.

The optical elements on the circle of diameter 10 mm and centered on the optical center of the refraction area may be micro lenses having a mean sphere of 2.75 D.

The optical elements on the circle of diameter 20 mm and centered on the optical center of the refraction area may be micro lenses having a mean sphere of 4.75 D.

The optical elements on the circle of diameter 30 mm and centered on the optical center of the refraction area may be micro lenses having a mean sphere of 5.5 D.

The optical elements on the circle of diameter 40 mm and centered on the optical center of the refraction area may be micro lenses having a mean sphere of 5.75 D.

The mean cylinder of the different micro lenses may be adjusted based on the shape of the retina of the person.

According to embodiments, the refraction area of the base-lens substrate may comprise a far vision reference point, a near vision reference, and a meridian line joining the far and near vision reference points. For example, the refraction area may comprise a progressive additional lens design adapted to the prescription of the person or adapted to slow down the progression of the abnormal refraction of the eye of the person wearing the lens element.

The meridian line corresponds to the locus of the intersection of the main gaze direction with the surface of the lens.

In that case, the optical elements may be configured so that in standard wearing conditions along any horizontal section of the lens the mean sphere and/or the mean cylinder of the optical elements increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one of the optical elements, has an optical function of not focusing an image on the retina of the eye of the person when the lens element is worn in standard wearing conditions.

Advantageously, such optical function of the optical element combined with a refractive area having at least one refractive power different from the refractive power of the prescription allows slowing down the progression of the abnormal refraction of the eye of the person wearing the lens element.

The optical elements may be non-contiguous optical elements.

In the sense of the disclosure two optical elements are non-contiguous if for all the paths linking the two optical elements one may measure at least along part of each path the refractive power based on a prescription for the eye of the person.

When the two optical elements are on a spherical surface, the two optical elements are non-contiguous if there for all the paths linking the two optical elements one may measure at least along part of each path the curvature of said spherical surface.

According to an embodiment, at least one of the optical elements has an optical function of focusing an image on a position other than the retina.

Preferably, at least 50%, for example at least 80%, for example all, of the optical elements have an optical function of focusing an image on a position other than the retina.

According to an embodiment, at least one of the optical elements has a non-spherical optical function.

Preferably at least 50%, for example at least 80%, for example all, of the optical elements have a non-spherical optical function.

In the sense of the disclosure, a "non-spherical optical function" is to be understood as not having a single focus point.

The at least one element having a non-spherical optical function is transparent.

One can add these optical elements on a defined array like square or hexagonal or random or other.

The optical element may cover specific zones of the base lens substrate, like at the center or any other area.

The optical element density or the quantity of power may be adjusted depending on zones of the base-lens substrate. Typically, the optical element may be positioned in the periphery of the base-lens substrate, in order to increase the effect of the optical element on myopia control, so as to compensate peripheral defocus due to the peripheral shape of the retina for example.

According to an embodiment, at least one, for example all, of the optical elements has a shape configured so as to create a caustic in front of the retina of the eye of the person. In other words, such optical element is configured so that every section plane where the light flux is concentrated if any, is located in front of the retina of the eye of the person.

According to an embodiment, the at least one, for example all, of the optical element having a non-spherical optical function is a multifocal refractive micro-lens.

In the sense of the disclosure, an optical element is "multifocal refractive micro-lens" includes bifocals (with two focal powers), trifocals (with three focal powers), progressive addition lenses, with continuously varying focal power, for example aspherical progressive surface lenses.

According to an embodiment, the at least one multifocal refractive micro-lens has a toric surface. A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment, the at least one of the optical element having a non-spherical optical function, for example all, of the optical elements is a toric refractive micro-lens. For example, a toric refractive micro-lens with a sphere power value greater than or equal to 0 diopter (δ) and smaller than or equal to +5 diopters (δ), and cylinder power value greater than or equal to 0.25 Diopter (δ).

As a specific embodiment, the toric refractive microlens may be a pure cylinder, meaning that minimum meridian line power is zero, while maximum meridian line power is strictly positive, for instance less than 5 Diopters.

According to an embodiment, at least one, for example all of the optical element, has discontinuities, such as a discontinuous surface, for example Fresnel surfaces and/or having a refractive index profile with discontinuities.

At least one, for example all, of the diffractive lenses may comprise a metasurface structure as disclosed in WO2017/176921.

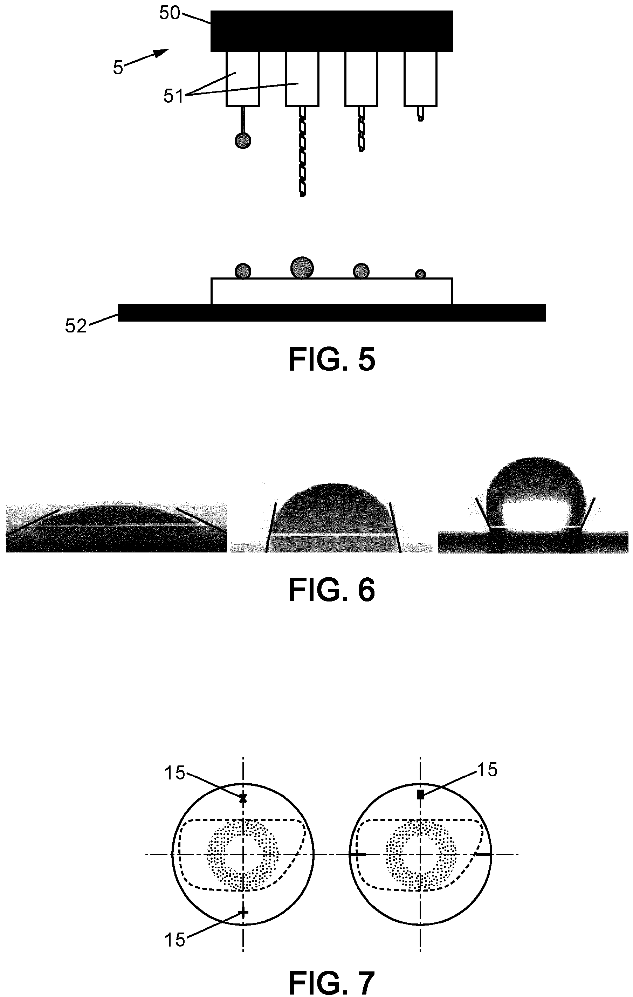

The diffractive lens may be a Fresnel lens whose phase function ψ(r) has π phase jumps at the nominal wavelength. One may give these structures the name "π-Fresnel lenses" for clarity's sake, as opposition to unifocal Fresnel lenses whose phase jumps are multiple values of 2π. The π-Fresnel lens whose phase function is displayed in Figure 5 diffracts light mainly in two diffraction orders associated to dioptric powers 0 δ and a positive one P, for example 3 δ.

According to an embodiment, at least one, for example all of the optical element, is a multifocal binary component.

According to an embodiment, at least one, for example all of the optical element, is a pixelated lens. An example of multifocal pixelated lens is disclosed in Eyal Ben-Eliezer et al, APPLIED OPTICS, Vol. 44, No. 14, 10 May 2005.

According to an embodiment, at least one, for example all of the optical elements, has an optical function with high order optical aberrations. For example, the optical element is a micro-lens composed of continuous surfaces defined by Zernike polynomials.

According to other embodiments, the optical elements do not induce a local change in optical power of the optical device but provide other optical functions.

For instance, the optical elements can be used to provide a global phase profile made of a multiple, yet finite number of constant phase optical element. Each microelement in that case presents a discrete profile having a constant thickness - the thickness being measured as the distance between the surface from which the optical element protrudes and the opposite surface of the optical element - for inducing a phase change in the optical element.

Each optical element can have a maximum height, e.g., measured in a direction perpendicular to the surface of the base-lens substrate or layer thereof from which it extends that is less than or equal to 0.5 millimeters (mm), such as, for example, less than or equal to or between any two of 0.4 mm, 0.3 mm, 0.2 mm, 0.1 mm, 100 micrometers (µm), 90 µm, 80 µm, 70 µm, 60 µm, 50 µm, 40 µm, 30 µm, 20 µm, 10 µm, 5 µm, 1 µm, or smaller. In embodiments the maximum height of the optical elements may range between 0.1 µm and 50 µm. Each of concave and convex microelement/microlenses can have a diameter, respectively, that is less than or equal to 2.0 mm, such as, for example, less than or equal to or between any two of 2.0 mm, 1.5 mm, 1.0 mm, 0.5 mm, 0.1 mm, 80 µm, 60 µm, 40 µm, 20 µm, or smaller. In embodiments, the diameter or maximum length / width of the optical elements may range between 0.5µm and 1.5 mm.

The method for forming the optical article 1 comprises performing differentiate coating deposition 100 on the second surface of the base-lens substrate. Said differentiate coating deposition on part, or all the second surface of the base-lens substrate. The differentiate coating deposition differs between at least two areas, or sets of areas, of the second lens surface, which are defined according to their relative position with respect to the optical elements.

With reference to figures 3a, 3b, 3d and 3e, the second lens surface 10b may comprise two areas or sets or areas which comprise:
- A first area or set of areas Z1, each first area corresponding to the location of one optical element 20, if the latter is disposed in the second lens surface 10b, or at a position of the second lens surface which is superposed to the position of at least one optical element, if the latter is embedded within the base-lens substrate.
- A second area or set of areas Z2, each second area Z2 being located at a position of the second lens surface 10b that is devoid of any optical element, or in other word, which corresponds to the areas of the second lens surface extending between optical elements, or which is located at a position superposed to an area of the base-lens substrate devoid of optical element, if the optical elements are embedded within the base-lens substrate.

When the optical elements 20 are embedded within the base-lens substrate 1, the optical elements are formed at an interface 13 between two layers of base-lens substrate. In that case, the two areas or sets or areas Z1, Z2 of the second lens surface may be defined such that a ray of incident light extending normal to the second lens surface at a border between a first area and a second area reaches the interface at a lateral end of an optical element, as shown schematically in figure 3f. In a refined embodiment, instead of using incident light being normal to second lens surface, we may define the two areas Z1,Z2 such that a ray of light at a border between a first area and a second area reaches the interface at a lateral end of an optical element, for an incident light ray reaching the user eye pupil, of the user eye center of rotation.
This permits to take account of the parallax provided by the difference in height position of the differentiate coating and the embedded optical elements.

Accordingly, the differentiate coating deposition varies depending whether the zone to be coated is a zone corresponding to an optical element 20 or not. This allows adapting the coating in order to selectively adapt or modify either the optical properties or the mechanical properties of the optical elements, or of the areas surrounding said optical elements, as disclosed in more details below.

According to the claimed invention, the areas or sets of areas further comprise a third area or set of areas Z3, wherein each third area Z3 extends between a first area Z1 located at the position of an optical element, and second area Z2 located at a position devoid of optical element. In that case, each third area Z3 corresponds to a border of an optical element or a transition area between an optical element and a zone devoid of optical element. An example of this embodiment of the claimed invention is shown schematically in figure 3c.

Thus, the differentiate coating deposition is a step of coating the second lens surface, wherein at least one parameter of the coating deposition varies depending on whether the area to be coated is:
- A first area Z1, i.e. an optical element disposed on the second lens surface,
- A second area Z2, which is an area of the second lens surface devoid of optical component, and
- A third area Z3, i.e. a transition area between an optical element and an area devoid of optical element.

In embodiments, the definition of the areas that are coated differently can further depend on the location of the optical element on the base-lens substrate. For instance, the base-lens substrate 10 may include a plurality of optical elements 20, some or which are located centrally and others are located in periphery. In that case, either the first, the second and possibly the third areas may further be differentiated depending on whether they relate to an optical element located at the center or at the periphery of the article.

The parameter of the coating deposition that varies depending on the considered area may include presence or absence of coating of an area. According to the area definition provided above, in an embodiment, only first areas Z1, i.e. only the optical elements are coated. Alternatively, only second areas Z2, i.e. only the areas devoid of any optical elements, are coated. According to another embodiment, when third areas are defined, only third areas Z3, i.e. transition areas between an optical element and a neighboring zone devoid of optical elements, are coated. According to still another embodiment, all the second lens surface except the third areas Z3 are coated.

Selectively coating some regions of the second lens surface may thus allow to selectively provide desired optical or mechanical properties to only the coated regions, by selecting a coating with adequate properties.

According to other embodiments, the parameters of the coating deposition that vary depending on the coated area may include at least one of the following:
- Composition of the coating material,
- Refractive index of the coating material,
- Viscosity of the coating material,
- Mechanical properties of the coating material and in particular hardness of the obtained coating,
- Optical properties of the coating material,
- Transmissivity of the coating material in a considered range of wavelengths,
- Thickness of the deposited coating material,
- Coating technique by which the coating material is deposited,
- Preliminary treatment performed on the considered area, such as physical or chemical surface activating and cleaning treatment or hydrophobic or hydrophilic treatment surface, etc.

Of course, changing the refractive index, transmissivity, viscosity or mechanical properties of the coating material may be obtained by changing the composition of said material.

Moreover, more than one parameter can be changed according to the considered area of the second lens surface. For instance, some areas may be coated with a first coating material to obtain a coating having a first thickness, and other areas may be coated with a second coating material to obtain a coating having a different thickness.

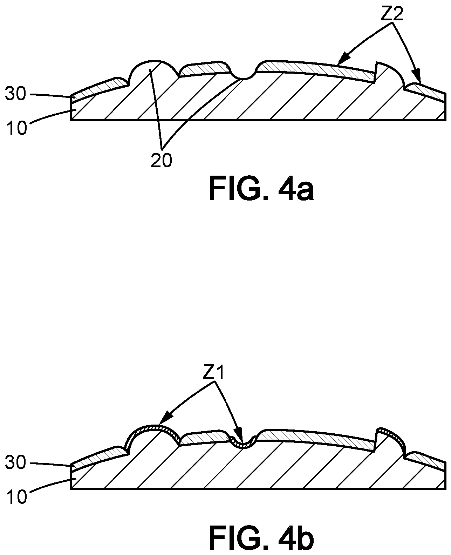

According to another example schematically shown in figures 4a and 4b, a base-lens substrate 10 comprising optical elements 20 protruding or in recess from the second lens surface 10b thereof may be coated, on second areas Z2 outside the microstructures, with an anti-abrasion coating having an index of refraction of 1.5, based on 100% solid acrylate / epoxysilane composition, exhibiting a thickness of 10µm, and, on first areas Z1 corresponding to the microstructures, with a coating formed of the same composition and further comprising silica nanoparticles, with a thickness of 8 µm. According to such examples, the coating 30, at the locations of the microstructures is rendered thinner but more rigid regarding anti-abrasion properties and more diffusing due to the addition of nanoparticles than at the locations devoid of microstructures.

Therefore, the differentiate coating deposition may comprise performing 110 a first coating deposition on one or several areas of the second lens surface (an example of which corresponds to figure 4a), and then performing a second coating deposition 120 (for instance figure 4b) on either:
- Areas of the second lens surface that were not coated during the first coating deposition, or
- Some parts of the areas that were coated during the first coating deposition.

A curing step 115 may be performed between the first and second coating depositions in order to prevent any mixing of the coating materials or any deformation of the coating obtained after the first coating deposition, and another one 125 may be performed after the second coating deposition. Of course, the number of successive coating deposition steps with different parameters is not limited.

The composition of the coating material may be selected from compositions comprising acrylate or methacrylates, epoxysilanes, alkoxysilane, metal oxide colloids such as SiO2, ZrO2, TiO2, photoinitiators, surfactants, epoxides, isocyanates, siloxanes, vinyl, urethanes, polyols.

In embodiments, the coating material is suitable for forming an abrasion resistant coating and is thus prepared from compositions comprising at least one alkoxysilane and/or one hydrolyzate of the latter obtained, for example, by hydrolysis with a hydrochloric acid solution. After the hydrolysis stage, the duration of which is generally between 2 h and 24 h, preferably between 2 h and 6 h, catalysts can optionally be added. A surface-active compound is preferably also added in order to promote the optical quality of the deposit.

Mention may be made, among the coatings recommended in the present invention, of coatings based on epoxysilane hydrolyzates, such as those described in the patents EP 0 614 957, US 4 211 823 and US 5 015 523.

A preferred composition for an abrasion-resistant coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferentially, the hydrolyzate used is a γ-glycidoxypropyltrimethoxysilane (GLYMO) and dimethyldiethoxysilane (DMDES) hydrolyzate or else a γ-glycidoxypropyltrimethoxysilane (GLYMO) and triethyl orthosilicate (TEOS) hydrolyzate.

In embodiments, part or all the differentiate coating deposition may be performed by inkjet coating. In that case the coating material is selected accordingly in order to be usable by inkjet coating.

For instance, the composition of the coating may comprise at least one non-hydrolyzed epoxy(alkoxy)silane, at least one dispersion of inorganic nanoparticles, at least one acrylate or silane binder, and at least one free radical photoinitiator, cationic photoinitiator, or a combination thereof, such as those described in EP3608370, or in WO 2017074429 for photocromic coating depositions.

With reference to figure 5, an inkjet printing device 5 has a printing head 50 comprising one or a plurality of nozzles 51 that eject coating material on the surface to be coated. The inkjet printing device also comprises a movable support 52 on which the surface to be coated is deposited, and a computer controlling the relative position of the support with respect to the printing nozzles, in order to accurately position the surface to be coated.

The pattern of the droplet deposition is performed in accordance with a reference that is called an image. Some inkjet printing devices are configured to implement so-called "Drop on Demand" technology, by which the ejection of material can be performed on a droplet by droplet basis. A variable volume can also be obtained by using a multi-drop function, wherein a nozzle ejects several small droplets than can merge before touching the printed surface. When two droplets touch one another, they merge. Thus, by depositing droplets touching one another, a uniform layer can be formed. Moreover, by controlling the density, volume and number of deposited droplets, it is possible to chose between isolated droplets, to deposit droplets in gradients (density variation along the coated surface) or in gradient of size, or to form a layer of desired thickness.

When material is deposited on the surface, a curing is performed in order to fix it on the surface. Common curings are done by application of thermal or radiation energy, such as UV light.

In the case where inkjet coating is used in order to perform the differentiate coating deposition, another varying parameter of the differentiate coating deposition may include the size or volume, the density and the shape of the deposited droplets of coating material. Regarding the shape of the deposited droplets, when a single drop is deposited on a surface, it usually keeps a spherical shape. With reference to figure 6, the height and the radius of the spherical cap depend on the droplet volume and on the contact angle between the surface and the droplet. Therefore, it is possible to change the shape of the droplet by performing a preliminary 90 surface treatment, either hydrophobic (which will increase the contact angle) or hydrophilic (which will reduce the contact angle) on desired areas prior to performing the coating of said areas.

In embodiments, the method may also comprise a preliminary step 80 of determining the locations of the optical elements in order to determine the location of the different areas to be coated and hence the locations of the droplets to be deposited by an inkjet printing device. To this end, with reference to figure 7, a surface of the base-lens substrate 10 may comprise permanent or temporary micro-markings 15 that can be detected, and with reference to which the positions of the optical elements are known. The micro-markings 15 are preferably located at a position outside from the visual area of the surface and are designed to avoid symmetry errors. Thus, by determining the locations of the micro-markings it is possible to infer the locations of the optical elements.

Alternatively, for optical elements which are located on the second lens surface of the base-lens substrate, the locations of these elements can be determined using a device in document US 2016363506. This device comprises a setup comprising a light source, a mirror and a collimating lens, which generates a collimated light beam towards the lens bearing the optical elements. A diffusive screen is arranged to send back light having gone through the lens and a camera is configured for acquiring an image of the diffusive screen and process said image to infer the locations of the optical elements.

Once the locations of the optical elements are known, the inket printing device may be operated either by moving the support of the base-lens substrate in order to position said substrate correctly, or by adapting the image, i.e. the drop projecting pattern, used to drive the printing head.

If a preliminary 90 hydrophobic or hydrophilic treatment of some areas is performed prior to the differentiate coating deposition, it may be performed once the locations of the optical elements are determined in step 80.

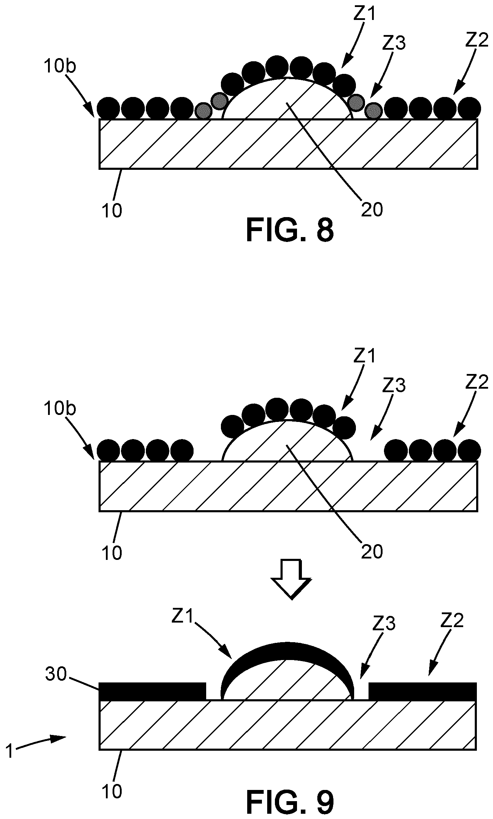

With reference to figures 8 to 14, several examples of differentiate coating depositions will now be described.

With reference to figures 8 and 9, the base-lens substrate 10 may comprise optical elements 20 protruding from the second lens surface thereof. For instance, these optical elements can be micro-lenses having variable power, for instance positive power between + 2D and +4D. Differentiate coating deposition may be performed in order to improve mechanical resistance (in particular abrasion / scratch resistance) of the optical elements protruding from the second lens surface without modifying their shapes. As already shown in figure 1c commented earlier, a standard coating deposition would provide modification to shape of the optical elements (which, in the case of microlenses having refractive power, changes said refractive power) in the vicinity of the frontier of the microlenses.

Therefore, according to an embodiment of the claimed invention, one example of which shown is in figure 8, the differentiate coating deposition may comprise performing inkjet coating, wherein the size of the deposited droplets depends on the considered area to be coated. In particular, the size of the droplets may be reduced in the third areas Z3, corresponding to transition areas between the optical elements and the surface surrounding the optical elements, as compared to the droplets size used for coating the first areas Z1 corresponding to the top of the optical elements and the second areas Z2 corresponding to the zones devoid of optical elements. Using reduced droplets size at the transition areas enable preserving the geometry of the optical elements.

In the examples described below with reference to figures 9 to 12 and 14, the top part of each figure illustrates the principle of a differentiate coating deposition that can be performed by inkjet printing and the lower part of each figure illustrates the optical article 1 comprising the obtained coating 30.

According to another embodiment of the claimed invention, shown in figure 9, the differentiate coating deposition may comprise depositing coating only on the first Z1 and second areas Z2, while keeping transition areas Z3 between the optical elements and the surrounding areas devoid of coating. This can be achieved using inkjet deposition for increased precision. Accordingly, only the top of the optical elements is coated in order to avoid deformation at the transition areas, while providing abrasion resistance at the top of the optical elements and on the areas of the second lens surface devoid of the optical elements.

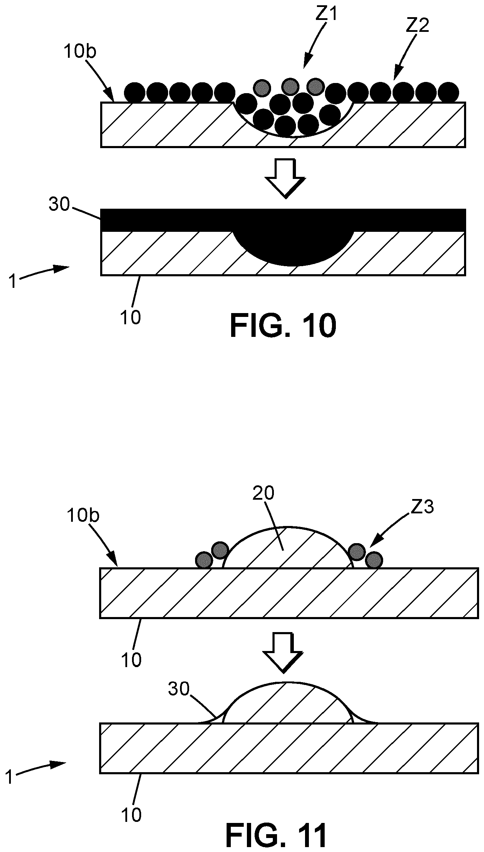

Differentiate coating deposition may also be performed in order to preserve the shape of optical elements formed in recess of the second lens surface, as shown schematically in figure 10. According to an embodiment, for optical elements formed in recess of the second lens surface, differentiate coating deposition may include:
- Performing a first coating of the second lens surface with a constant thickness of the coating - this first coating step may be performed by inkjet coating using a first droplet size, or may be performed by spin coating or dip coating. The resulting coating of the surface may not be flat because of the optical elements formed in recess.
- Performing a second coating only on the first area(s) Z1 of the second lens surface 10b, by inkjet coating, with a reduced droplet size, in order to compensate the deformation induced by the recessed optical elements and obtain a flat coating.

Such differentiate coating deposition may also be used in order to embed the recessed optical elements 20. In this case, the deposited coating 30 forms optical elements 20 protruding towards the base-lens substrate 10. The coating material may have a refractive index different from the refractive index of the base-lens substrate.

For instance, if the optical elements are microlenses with a radius Rmc, the refractive power provided by the microlenses when encapsulated, i.e. formed by the coating, is P=(RI_{c}-RIₛ)/R_{mc}, where RI_{c} is the refractive index of the coating, and RIₛ is the refractive index of the base-lens substrate. For positive lens Ri_{c} should be greater than Rls and for negative lens Riₓ should be lower than RIₛ.

The coating may be an abrasion resistant coating, or a polyurethane thick coating (20-30µm) to provide photochromic dyes for instance.

In other embodiments, when the optical elements 20 are microlenses providing optical power, the differentiate coating deposition may be performed in order to change the optical power or the asphericity of the microlenses.

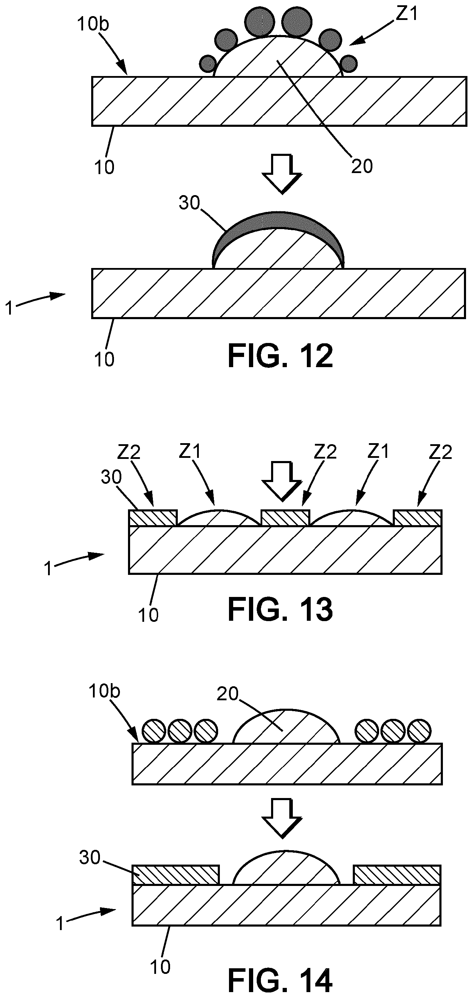

With reference to figures 11 and 12, examples are shown in the case of microlenses protruding from the second lens surface of the base-lens substrate. However, differentiate coating deposition may also be performed in order to change power or asphericity of microlenses formed in recess of said surface and that intend to be embedded later by addition of another coating or layer of material. For instance, depositing coating on the sides of the lenses formed in recess may allow changing asphericity of the lenses and depositing coating on the bottom of said lenses may allow changing their power.

When microlenses are protruding from the second lens surface, asphericity of the microlenses may be changed by depositing coating material only on third areas Z3, i.e. on the borders of each microlens 20, as shown schematically in figure 11.

With reference to figure 12, the refractive power of the microlenses may be be changed by depositing coating material only on the microlenses 20 in order to change their shape. In this case the coating material may be selected to have the same refractive index as the material forming the microlens. Preferably, the coating deposition on the microlenses may also be performed by inkjet deposition wherein, the closer from the center of the microlens, the larger are the deposited droplets. A gradient of the size of the droplets may be used, as explained above. Usual resins used for inkjet coating are based on acrylate or methacrylate polymers with refractive index in the range of 1.52-1.56.

In embodiments, the modification of the power and/or asphericity of the microlenses may be performed individually, lens by lens. This may allow customizing the properties of microlenses that are produced identically, for instance using a same molding insert. For instance, for myopia control purposes, the microlenses may be arranged on the base-lens substrate according to a pattern which is based on the peripheral retinal shape. In that case, it may be possible to add more positive power in the peripheral microlenses than to central microlenses in order to better match the retina shape when the retina is stepper on periphery than average retinal shape.

In other embodiments, the differentiate coating deposition may allow modifying the spectral properties of some areas of the second lens surface, for instance in order to change the spectral properties of the optical elements.

For instance, the differentiate coating deposition may be performed such that the coating of the second areas Z2, relative to zones devoid of optical elements, exhibits a transmissivity coefficient different from the coating of the optical elements.

According to an example, when optical elements are microlenses configured for myopia control, the differentiate coating may be performed to lower the transmissivity coefficient (for instance about 90%) of the second areas as compared to the transmissivity coefficient of the first areas (for instance between 95 and 100%)., in order to increase the difference between energy provided in from of the retina (provided by the microlenses) and the energy focused on the retina (provided by the remainder of the optical article).

To do so, the differentiate coating deposition may comprise coating only the second areas Z2 with a coating material having a desired transmissivity coefficient, or differently coating the first and second areas, with different coating materials, to provide the desired difference in transmissivity coefficient. An example of this differentiate coating deposition is shown schematically in figure 13 with microlenses 20 protruding from the second lens surface 10b, however the same may also be applied when microlenses are embedded within the base-lens substrate.

According to another embodiment, an example of which is shown in figure 14, the differentiate coating deposition may be used to selectively change the scattering properties of areas of the second lens surface depending on whether these areas correspond to locations of optical elements or locations devoid of optical elements. In particular, some areas, such as areas devoid of optical elements (second areas), may be coated by a diffusing material in order to exhibit increased scattering properties. Areas that have to exhibit increased scattering properties can be coated with a hard coat providing desired scattering level ; the larger difference of refractive index between the hard coat and the substrate, the higher is the resulting scattering.

For instance, when optical elements are microlenses configured for myopia control, since both microlenses and scattering can make myopia slow down, it is relevant to combine them to increase myopia control efficiency. Instead or providing continuous scattering coating on the second lens surface, it may be more relevant to provide a differentiate coating deposition which comprise depositing a scattering coating only the second areas devoid of optical elements. Accordingly, it is more convenient for the accuracy of microlens power measurement, for instance using mechanical sensor profilometer or using light reflection or deflectometry, that the microlenses be devoid of a scattering layer. Also, having only the zones surrounding microlenses coated allows minimizing the visibility of the microlenses and allows reducing size, density or power of the microlenses since part of the myopia control comes from the scattering performed by the other areas of the optical article.

## Claims

1. A method for manufacturing an optical article (1), comprising:
- providing a base-lens substrate (10) having opposite first and second lens surfaces (10a, 10b), and at least one optical element (20) disposed on the second lens surface (10b), each optical element (20) having a maximum height that is less than or equal to 0.5 mm, and a maximum width that is less than or equal to 2.0 mm, and
- performing a differentiate coating deposition on the second lens surface, **characterized in that** the second lens surface (10b) comprises at least three areas (Z1, Z2,Z3) defined according to their relative position with respect to at least one optical element (20), and the differentiate coating deposition comprises changing at least one parameter of the coating deposition according to the considered area, the at least three areas (Z1, Z2, Z3) of the second lens surface comprising:
- a first set of areas (Z1) located at the position of at least one optical element,
- a second set of areas (Z2) located at a position of the second lens surface devoid of any optical element (20), and
- a third set of areas (Z3) corresponding to transition areas between an optical element (20) and a zone (Z2) of the second lens surface devoid of optical element.

2. A method according to claim 1, wherein the parameter of the coating deposition changing according to the area includes at least one of the group consisting of:
- Presence or absence of coating,
- Composition of coating material,
- Refractive index of coating material,
- Viscosity of the coating material,
- Optical properties of the coating material, including transmissivity of the coating material in at least one determined range of wavelengths, or scattering properties of the coating material,
- Mechanical properties of the coating material,
- Hardness of the coating,
- Thickness of the coating,
- Volume and/or shape of droplets of coating deposited by inkjet,
- Preliminary surface treatment performed on the considered area.

3. A method according to any of the preceding claims, wherein the differentiate coating deposition is configured to change at least one optical property of at least one optical element among optical power, asphericity, colour, and transmissivity.

4. A method according to any of the preceding claims, wherein the differentiate coating deposition is configured to preserve the shape of each optical element (20) after coating.

5. A method according to any of the preceding claims, wherein the differentiate coating deposition is configured to change at least one optical or mechanical property of at least one area (Z2) of the base-lens substrate devoid of any optical element.

6. A method according to any of the preceding claims, wherein the differentiate coating deposition is performed by inkjet printing.

7. A method according to claim 6, further comprises performing a preliminary treatment (90) of the second lens surface (10b) prior to performing the differentiate coating deposition (100) in order to locally change the contact angle between a droplet of coating material and the second lens surface.

8. A method according to any of the preceding claims, further comprising a preliminary step of locating (80) at least one optical element, and inferring, from said location, the locations of the at least two areas.

9. A method according to any of the preceding claims, wherein performing a differentiate coating deposition (100) comprises:
- performing coating deposition (110) on a first area or set of areas,
- curing the deposited coating (115), and
- performing coating deposition (120) with at least one changed coating parameter on a second area or set of areas.

10. A method according to any of the preceding claims, wherein the base-lens substrate (10) comprises at least one optical element (20) protruding from the second lens surface (10b), and performing differentiate coating composition (100) comprises one of:
- depositing coating only on the optical element (20),
- deposition coating only on the areas (Z2) of the second lens surface devoid of the optical element,
- deposition coating only on a transition area (Z3) between an optical element and a zone devoid of optical element,
- depositing coating over the second lens surface except on transition areas (Z3) between an optical element and a zone devoid of optical element.

11. A method according to the preceding claim, wherein performing differentiate coating composition comprises depositing coating only on the optical element (20) or on a transition area (Z3) between an optical element and a zone devoid of optical element in order to change asphericity and/or optical power of the optical element.

12. A method according to any of claims 1 to 9, wherein the base-lens substrate (10) comprises at least one optical element (20) protruding from, or formed in recess from the second lens surface (10b), the coating deposition is performed by inkjet printing and performing differentiate coating deposition on the second lens surface (10b) comprises changing the size of the deposited droplets according to the considered area to be coated in order to achieve constant thickness of the deposited coating over the second lens surface.

13. A method according to any of the preceding claims, wherein each optical element has a maximum height comprised between 0,1 µm and 50 µm and a maximum width comprised between 0.5 µm and 1.5 mm.

14. An optical article (1), comprising:
- a base-lens substrate (10) having opposite first (10a) and second lens surfaces (10b), and at least one optical element (20) disposed on the second lens surface (10b), each optical element (20) having a maximum height that is less than or equal to 0.5 mm, and a diameter that is less than or equal to 2.0 mm,
- a coating (30) extending over at least part of the second lens surface (10b), wherein the optical article (1) is obtained by implementing the method according to any of the preceding claims.

## Patentansprüche

1. Verfahren zum Fertigen eines optischen Artikels (1), umfassend:
- Bereitstellen eines Basislinsensubstrats (10) mit gegenüberliegenden ersten und zweiten Linsenoberflächen (10a, 10b) und mindestens eines optischen Elements (20), das auf der zweiten Linsenoberfläche (10b) angeordnet ist, wobei jedes optische Element (20) eine maximale Höhe, die kleiner als oder gleich 0,5 mm ist, und eine maximale Breite aufweist, die kleiner als oder gleich 2,0 mm ist, und
- Durchführen einer differenzierten Beschichtungsabscheidung auf der zweiten Linsenoberfläche, **dadurch gekennzeichnet, dass** die zweite Linsenoberfläche (10b) mindestens drei Bereiche (Z1, Z2, Z3) umfasst, die gemäß ihrer relativen Position in Bezug auf mindestens ein optisches Element (20) definiert sind, und die differenzierte Beschichtungsabscheidung das Ändern mindestens eines Parameters der Beschichtungsabscheidung gemäß dem betrachteten Bereich umfasst, wobei die mindestens drei Bereiche (Z1, Z2, Z3) der zweiten Linsenoberfläche Folgendes umfassen:
- einen ersten Satz von Bereichen (Z1), der sich an der Position mindestens eines optischen Elements befindet,
- einen zweiten Satz von Bereichen (Z2), der sich an einer Position der zweiten Linsenoberfläche befindet, die frei von jeglichem optischen Element (20) ist, und
- einen dritten Satz von Bereichen (Z3), der Übergangsbereichen zwischen einem optischen Element (20) und einer Zone (Z2) der zweiten Linsenoberfläche entspricht, die frei von optischem Element ist.

2. Verfahren nach Anspruch 1, wobei der Parameter der Beschichtungsabscheidung, der sich gemäß dem Bereich ändert, mindestens eines aus der Gruppe einschließt, die aus Folgendem besteht:
- Anwesenheit oder Abwesenheit einer Beschichtung,
- Zusammensetzung des Beschichtungsmaterials,
- Brechungsindex des Beschichtungsmaterials,
- Viskosität des Beschichtungsmaterials,
- optischen Eigenschaften des Beschichtungsmaterials, einschließlich Transmissivität des Beschichtungsmaterials in mindestens einem bestimmten Wellenlängenbereich, oder Streueigenschaften des Beschichtungsmaterials,
- mechanischen Eigenschaften des Beschichtungsmaterials,
- Härte der Beschichtung,
- Dicke der Beschichtung,
- Volumen und/oder Form der durch Tintenstrahl abgeschiedenen Beschichtungströpfchen,
- vorbereitende Oberflächenbehandlung, die auf dem in Frage kommenden Bereich durchgeführt wurde.

3. Verfahren nach einem der vorhergehenden Ansprüche, wobei die differenzierte Beschichtungsabscheidung ausgelegt ist, um mindestens eine optische Eigenschaft mindestens eines optischen Elements von Brechkraft, Asphärizität, Farbe und Transmissivität zu ändern.

4. Verfahren nach einem der vorhergehenden Ansprüche, wobei die differenzierte Beschichtungsabscheidung ausgelegt ist, um die Form jedes optischen Elements (20) nach dem Beschichten beizubehalten.

5. Verfahren nach einem der vorhergehenden Ansprüche, wobei die differenzierte Beschichtungsabscheidung ausgelegt ist, um mindestens eine optische oder mechanische Eigenschaft mindestens eines Bereichs (Z2) des Basislinsensubstrats, das frei von jeglichem optischen Element ist, zu ändern.

6. Verfahren nach einem der vorhergehenden Ansprüche, wobei die differenzierte Beschichtungsabscheidung durch Tintenstrahldrucken durchgeführt wird.

7. Verfahren nach Anspruch 6, ferner umfassend Durchführen einer vorbereitenden Behandlung (90) der zweiten Linsenoberfläche (10b) vor dem Durchführen der differenzierten Beschichtungsabscheidung (100), um den Kontaktwinkel zwischen einem Tröpfchen des Beschichtungsmaterials und der zweiten Linsenoberfläche lokal zu ändern.

8. Verfahren nach einem der vorhergehenden Ansprüche, das ferner einen vorbereitenden Schritt des Lokalisierens (80) mindestens eines optischen Elements und des Ableitens der Orte der mindestens zwei Bereiche von dem Ort umfasst.

9. Verfahren nach einem der vorhergehenden Ansprüche, wobei das Durchführen einer differenzierten Beschichtungsabscheidung (100) Folgendes umfasst:
- Durchführen einer Beschichtungsabscheidung (110) auf einem ersten Bereich oder einem Satz von Bereichen,
- Härten der abgeschiedenen Beschichtung (115), und
- Durchführen einer Beschichtungsabscheidung (120) mit mindestens einem geänderten Beschichtungsparameter auf einem zweiten Bereich oder einem Satz von Bereichen.

10. Verfahren nach einem der vorhergehenden Ansprüche, wobei das Basislinsensubstrat (10) mindestens ein optisches Element (20) umfasst, das von der zweiten Linsenoberfläche (10b) vorsteht, und das Durchführen einer differenzierten Beschichtungszusammensetzung (100) eines von Folgendem umfasst:
- Abscheiden einer Beschichtung nur auf dem optischen Element (20),
- Abscheiden von Beschichtung nur auf den Bereichen (Z2) der zweiten Linsenoberfläche, die frei von dem optischen Element sind,
- Abscheiden von Beschichtung nur auf einem Übergangsbereich (Z3) zwischen einem optischen Element und einer Zone, die frei von optischem Element ist,
- Abscheiden einer Beschichtung über der zweiten Linsenoberfläche mit Ausnahme der Übergangsbereiche (Z3) zwischen einem optischen Element und einer Zone, die frei von optischem Element ist.

11. Verfahren nach dem vorhergehenden Anspruch, wobei Durchführen einer differenzierten Beschichtungszusammensetzung Abscheiden einer Beschichtung nur auf dem optischen Element (20) oder auf einem Übergangsbereich (Z3) zwischen einem optischen Element und einer Zone umfasst, die frei von optischem Element ist, um Asphärizität und/oder Brechkraft des optischen Elements zu ändern.

12. Verfahren nach einem der Ansprüche 1 bis 9, wobei das Basislinsensubstrat (10) mindestens ein optisches Element (20) umfasst, das aus der zweiten Linsenoberfläche hervorsteht, oder in der Vertiefung der zweiten Linsenoberfläche (10b) gebildet ist, die Beschichtungsabscheidung durch Tintenstrahldrucken durchgeführt wird, und das Durchführen einer differenzierten Beschichtungsabscheidung auf der zweiten Linsenoberfläche (10b) Ändern der Größe der abgeschiedenen Tröpfchen gemäß dem für die Beschichtung in Frage kommenden Bereich umfasst, um eine konstante Dicke der abgeschiedenen Beschichtung über der zweiten Linsenoberfläche zu erreichen.

13. Verfahren nach einem der vorhergehenden Ansprüche, wobei jedes optische Element eine maximale Höhe zwischen 0,1 µm und 50 µm und eine maximale Breite zwischen 0,5 µm und 1,5 mm aufweist.

14. Optischer Artikel (1), umfassend:
- ein Basislinsensubstrat (10) mit gegenüberliegenden ersten (10a) und zweiten Linsenoberflächen (10b) und mindestens ein optisches Element (20), das auf der zweiten Linsenoberfläche (10b) angeordnet ist, wobei jedes optische Element (20) eine maximale Höhe, die kleiner als oder gleich 0,5 mm ist, und einen Durchmesser aufweist, der kleiner als oder gleich 2,0 mm ist,
- eine Beschichtung (30), die sich über mindestens einen Teil der zweiten Linsenoberfläche (10b) erstreckt, wobei der optische Artikel (1) durch Implementieren des Verfahrens nach einem der vorhergehenden Ansprüche erhalten wird.

## Revendications

1. Procédé de fabrication d'un article optique (1), comprenant :
- la fourniture d'un substrat de lentille de base (10) ayant des première et seconde surfaces de lentille opposées (10a, 10b), et au moins un élément optique (20) disposé sur la seconde surface de lentille (10b), chaque élément optique (20) ayant une hauteur maximale inférieure ou égale à 0,5 mm, et une largeur maximale inférieure ou égale à 2,0 mm, et
- la réalisation d'un dépôt de revêtement différencié sur la seconde surface de lentille, **caractérisé en ce que** la seconde surface de lentille (10b) comprend au moins trois zones (Z1, Z2, Z3) définies selon leur position relative par rapport à au moins un élément optique (20), et le dépôt de revêtement différencié comprend la modification d'au moins un paramètre du dépôt de revêtement selon la zone considérée, les au moins trois zones (Z1, Z2, Z3) de la seconde surface de lentille comprenant :
- un premier ensemble de zones (Z1) situé à la position d'au moins un élément optique,
- un deuxième ensemble de zones (Z2) situé à une position de la seconde surface de lentille dépourvue de tout élément optique (20), et
- un troisième ensemble de zones (Z3) correspondant aux zones de transition entre un élément optique (20) et une zone (Z2) de la seconde surface de lentille dépourvue d'élément optique.

2. Procédé selon la revendication 1, dans lequel le paramètre du dépôt de revêtement changeant selon la zone comprend au moins l'un des éléments du groupe constitué de :
- présence ou absence de revêtement,
- composition de matériau de revêtement,
- indice de réfraction de matériau de revêtement,
- viscosité du matériau de revêtement,
- propriétés optiques du matériau de revêtement, comprenant la transmissivité du matériau de revêtement dans au moins une plage déterminée de longueurs d'onde, ou propriétés de diffusion du matériau de revêtement,
- propriétés mécaniques du matériau de revêtement,
- dureté du revêtement,
- épaisseur du revêtement,
- volume et/ou forme des gouttelettes de revêtement déposées par jet d'encre,
- traitement de surface préliminaire réalisé sur la zone considérée.

3. Procédé selon l'une quelconque des revendications précédentes, dans lequel le dépôt de revêtement différencié est configuré pour modifier au moins une propriété optique d'au moins un élément optique parmi la puissance optique, l'asphéricité, la couleur et la transmissivité.

4. Procédé selon l'une quelconque des revendications précédentes, dans lequel le dépôt de revêtement différencié est configuré pour préserver la forme de chaque élément optique (20) après revêtement.

5. Procédé selon l'une quelconque des revendications précédentes, dans lequel le dépôt de revêtement différencié est configuré pour modifier au moins une propriété optique ou mécanique d'au moins une zone (Z2) du substrat de lentille de base dépourvue de tout élément optique.

6. Procédé selon l'une quelconque des revendications précédentes, dans lequel le dépôt de revêtement différencié est réalisé par impression à jet d'encre.

7. Procédé selon la revendication 6, comprenant en outre la réalisation d'un traitement préliminaire (90) de la seconde surface de lentille (10b) avant de réaliser le dépôt de revêtement différencié (100) afin de modifier localement l'angle de contact entre une gouttelette de matériau de revêtement et la seconde surface de lentille.

8. Procédé selon l'une quelconque des revendications précédentes, comprenant en outre une étape préliminaire de localisation (80) d'au moins un élément optique, et de déduction, à partir de ladite localisation, des emplacements des au moins deux zones.

9. Procédé selon l'une quelconque des revendications précédentes, dans lequel la réalisation d'un dépôt de revêtement différencié (100) comprend :
- la réalisation d'un dépôt de revêtement (110) sur une première zone ou ensemble de zones,
- le durcissement du revêtement déposé (115), et
- la réalisation d'un dépôt de revêtement (120) avec au moins un paramètre de revêtement modifié sur une seconde zone ou ensemble de zones.

10. Procédé selon l'une quelconque des revendications précédentes, dans lequel le substrat de lentille de base (10) comprend au moins un élément optique (20) faisant saillie depuis la seconde surface de lentille (10b), et la réalisation de la composition de revêtement différencié (100) comprend l'une des opérations suivantes :
- le dépôt de revêtement uniquement sur l'élément optique (20),
- le dépôt de revêtement uniquement sur les zones (Z2) de la seconde surface de lentille dépourvues d'élément optique,
- le dépôt de revêtement uniquement sur une zone de transition (Z3) entre un élément optique et une zone dépourvue d'élément optique,
- le dépôt de revêtement sur la seconde surface de lentille sauf sur des zones de transition (Z3) entre un élément optique et une zone dépourvue d'élément optique.

11. Procédé selon la revendication précédente, dans lequel la réalisation de la composition de revêtement différencié comprend le dépôt de revêtement uniquement sur l'élément optique (20) ou sur une zone de transition (Z3) entre un élément optique et une zone dépourvue d'élément optique afin de modifier l'asphéricité et/ou la puissance optique de l'élément optique.

12. Procédé selon l'une quelconque des revendications 1 à 9, dans lequel le substrat de lentille de base (10) comprend au moins un élément optique (20) faisant saillie depuis, ou formé en retrait dans la seconde surface de lentille (10b), le dépôt de revêtement est réalisé par impression à jet d'encre et la réalisation du dépôt de revêtement différencié sur la seconde surface de lentille (10b) comprend la modification de la taille des gouttelettes déposées selon la zone considérée à revêtir afin d'obtenir une épaisseur constante du revêtement déposé sur la seconde surface de lentille.

13. Procédé selon l'une quelconque des revendications précédentes, dans lequel chaque élément optique ayant une hauteur maximale comprise entre 0,1 um et 50 um et une largeur maximale comprise entre 0,5 µm et 1,5 mm.

14. Article optique (1), comprenant :
- un substrat de lentille de base (10) ayant des première (10a) et seconde surfaces de lentille opposées (10b), et au moins un élément optique (20) disposé sur la seconde surface de lentille (10b), chaque élément optique (20) ayant une hauteur maximale inférieure ou égale à 0,5 mm, et un diamètre inférieur ou égal à 2,0 mm,
- un revêtement (30) s'étendant sur au moins une partie de la seconde surface de lentille (10b), dans lequel l'article optique (1) est obtenu par la mise en œuvre du procédé selon l'une quelconque des revendications précédentes.
